# EUROPÄISCHE PATENTSCHRIFT

(11) **EP 0 779 126 B1**
(45) Veröffentlichungstag und Bekanntmachung des Hinweises auf die Patenterteilung: **04.10.2001**
(21) Anmeldenummer: 96117323.4
(22) Anmeldetag: 29.10.1996
(51) Int. Cl.: B23Q 1/54

(54) **Werkzeugmaschine mit mehreren Antriebseinheiten**
Machine tool with several drive units
Machine-outil avec plusieurs unités d'entraînement

(30) Priorität: 15.12.1995 DE 19546878
(43) Veröffentlichungstag der Anmeldung: 18.06.1997
(73) Patentinhaber: CHIRON-WERKE GMBH & CO. KG, 78532 Tuttlingen (DE)
(72) Erfinder: Grund, Peter, Dr.-Ing., 78647 Trossingen (DE); Haninger, Rudolf, 78606 Seitingen (DE)
(74) Vertreter: Otten, Hajo, Dr.-Ing.

(56) Entgegenhaltungen:
- CH-A- 243 405
- DE-A- 2 925 953
- DE-U- 9 407 204
- FR-A- 2 391 031
- US-A- 3 771 230

## Beschreibung

Die vorliegende Erfindung betrifft eine Werkzeugmaschine mit mehreren Antriebseinheiten für einen Bearbeitungskopf, wobei jede Antriebseinheit den Bearbeitskopf längs einer eigenen Bewegungsbahn verfährt, so daß ein von dem Bearbeitungskopf gehaltenes Werkzeug an jeden Raumpunkt in einem Arbeitsraum verfahrbar ist.

Derartige Werkzeugmaschinen sind allgemein aus dem Stand der Technik bekannt.

Die Antriebseinheiten umfassen bei derartigen bekannten Werkzeugmaschinen Linear-Stellantriebe, die so angeordnet sind, daß die einzelnen Bewegungsbahnen in Richtung der Achsen eines kartesischen Koordinatensystemes verlaufen und senkrecht zueinander angeordnet sind. Damit sind die einzelnen Bewegungsbahnen bezüglich dieses kartesischen Koordinatensystemes entkoppelt, eine Antriebseinheit verfährt den Bearbeitungskopf immer genau entlang einer kartesischen Achse.

Die Linear-Stellantriebe sind in der Regel durch Kugelrollspindeln aufgebaut, die jeweils einen Schlitten verfahren, auf dem dann quer die nächste Antriebseinheit angeordnet ist.

Derartige Werkzeugmaschinen sind wegen der Entkopplung der Bewegungsbahnen einfach anzusteuern, erfordern jedoch einen großen mechanischen Aufwand, um die erforderliche mechanische Steifheit zu sichern. Diese Steifheit ist erforderlich, damit die Werkzeugmaschinen die zu bearbeitenden Werkstücke mit hoher Genauigkeit, Auflösung und Reproduzierbarkeit anfahren können.

Wegen der immer weiter zunehmenden Anforderungen bezüglich Genauigkeit, Reproduzierbarkeit und Auflösung sind an den mechanischen Aufbau neuer Werkzeugmaschinen hohe Anforderungen gestellt, was zu immer schwereren und komplizierter aufgebauten Werkzeugmaschinen führt, die nur noch mit entsprechendem Kostenaufwand herzustellen sind.

Die FR 2 391 031 A beschreibt eine Auslegervorrichtung, mit der ein Bearbeitungsteil verschweißt, zerschnitten oder auf der Oberfläche bearbeitet werden soll. Sie umfaßt einen Wagen, der gegenüber dem Bearbeitungsteil verfahrbar ist, sowie eine auf dem Bearbeitungsteil ggf. über ein Reibrad aufliegende Plattform, die auf dem eine unregelmäßige Oberfläche aufweisenden Bearbeitungsteil unter Beibehaltung ihrer Ausrichtung zur Horizontalen verfahrbar ist.

An dem Wagen ist oben an einem um eine Hochachse drehbaren vertikalen Pfosten ein erster Arm schwenkbar gelagert, der an seinem freien Ende einen weiteren Arm schwenkbar lagert, der an seinem äußeren Ende gelenkig mit der Plattform verbunden ist. Durch Verfahren des Wagens, Verschwenken des Pfostens sowie der beiden Arme auf kreisförmigen Bewegungsbahnen kann die Plattform auf dem Bearbeitungsteil hin- und hergefahren werden.

Aus der JP 93-60063 ist ein Roboterarm bekannt, der ein Parallelogrammgestänge aufweist, dessen einer Arm schwenkbar gelagert ist.

Vor diesem Hintergrund ist es Aufgabe der vorliegenden Erfindung, eine Werkzeugmaschine der eingangs genannten Art derart weiterzubilden, daß sie bei einfachem und preiswertem Aufbau eine hohe mechanische Steifheit ermöglicht.

Erfindungsgemäß wird diese Aufgabe dadurch gelöst, daß die Bewegungsbahnen kreisbogenförmig verlaufen und zumindest eine Antriebseinheit eine Parallelogrammführung umfaßt, wobei die Antriebseinheit einen Linear-Stellantrieb umfaßt, der in einer Diagonalen der Parallelogrammführung angeordnet ist, um über eine Längenveränderung dieser Diagonalen den Bearbeitungskopf zu verfahren.

Die der Erfindung zugrundeliegende Aufgabe wird auf diese Weise vollkommen gelöst. Die Erfinder der vorliegenden Anmeldung haben nämlich erkannt, daß eine völlige Abkehr von der Entkopplung der Bewegungsbahnen der einzelnen Antriebseinheiten im kartesischen Koordinatensystem zu einem völlig neuen Maschinenkonzept führt, bei dem die mechanische Steifheit bei gleichzeitig einfachem Aufbau im Vordergrund stehen kann. Bisher stieß eine derartige Kopplung der Bewegungsbahnen im kartesischen Koordinatensystem auf große Vorurteile, da die Steuerung der neuen Werkzeugmaschine wegen dieser Kopplung komplizierter ist als es bei bekannten Werkzeugmaschinen der Fall ist. Diese Steuerung ist jetzt aber wegen der heute zur Verfügung stehenden, praktisch unbegrenzten Rechen- und Speicherkapazitäten doch möglich, wobei verglichen mit den Kosten der mechanischen Komponenten die Kosten für die Rechen- und Speicherkapazität nahezu vernachlässigbar sind. Es ist eine reine Frage der Software geworden, auch mit derartig gekoppelten Bewegungsbahnen beliebige Fahrwege des Bearbeitungskopfes zu realisieren.

Die Erfinder der vorliegenden Anmeldung haben nun erkannt, daß dieses Vorurteil überwunden werden kann und daß kreisbogenförmig verlaufende Bewegungsbahnen verwendet werden können. Ein möglicher Vorteil dieses neuen Maschinenkonzeptes liegt darin, daß eine Umsetzung der Drehung des Antriebsmotors in eine Linearbewegung wegfallen kann. Die Kreisbahnen können nämlich unmittelbar durch Übersetzungsgetriebe aus der sich drehenden mechanische Aufbau realisierbar ist.

Darüber hinaus ermöglicht das neue Maschinenkonzept jedoch auch mechanisch sehr steife Anordnungen, die erst durch die erfindungsgemäß vorgesehenen kreisbogenförmig verlaufenden Bewegungsbahnen möglich sind.

Weiter ist von Vorteil, daß Parallelogrammführungen sehr steife Konstruktionen sind, die mit mechanisch geringem Aufwand und geringem Gewicht realisierbar sind. Derartige Parallelogrammführungen wurden für die Bewegung des Bearbeitungskopfes bei bekannten Werkzeugmaschinen bisher nicht eingesetzt, da die mit diesen Parallelogrammführungen erzielbaren Bewegungsbahnen nicht linear verlaufen. Die Erfinder haben dieses Vorurteil jetzt überwunden und bei der neuen Werkzeugmaschine derartige Parallelogrammführungen vorgesehen.

Erfindungsgemäß ist dabei von Vorteil, daß konventionelle Antriebe verwendet werden können, um die "Bewegung" des Parallelogrammes zu bewerkstelligen, also die Veränderung der Form des Parallelogrammes und damit der Länge der Diagonalen zu erreichen.

Hier ist es jedoch bevorzugt, wenn die Parallelogrammführung vier in den Ecken eines Parallelogrammes angeordnete, zueinander parallele Schwenkachsen aufweist, über die die Kanten des Parallelogrammes ausmachende Abstandshalter schwenkbar miteinander verbunden sind.

Diese Maßnahme hat insbesondere im Zusammenhang mit dem Linear-Stellantrieb Vorteile, da ein zwar schwenkbares und angetriebenes aber doch sehr steifes, sich nicht verwindendes Parallelogramm aufgebaut wird. Die Abstandshalter können dabei einfache Stangen oder aber auch massive Halter oder Platten sein, die die entsprechende Steifigkeit liefern.

Ferner ist es hier bevorzugt, wenn zwei benachbarte Schwenkachsen einer Parallelogrammführung fest in einer Raumebene angeordnet sind.

Hier ist von Vorteil, daß durch diese Raumebene die Ausrichtung des Bearbeitungskopfes festgelegt werden kann. Wenn nämlich zwei benachbarte Schwenkachsen in einer Raumebene fest angeordnet sind, so bleiben auch die beiden anderen Schwenkachsen immer in einer zu der festgelegten Raumebene parallelen Ebene, die zuerstgenannte, festgelegte Raumebene dient also als Bezugspunkt für sich anschließende Parallelogramme.

Dabei ist es dann ferner bevorzugt, wenn zwischen zwei aufeinanderfolgenden Parallelogrammführungen ein Verbindungsteil vorgesehen ist, an dem je zwei Schwenkachsen einer jeden Parallelogrammführung in je einer Raumebene angeordnet sind, wobei die beiden Raumebenen senkrecht oder parallel zueinander verlaufen.

Hier ist von Vorteil, daß mehrere Parallelogrammführungen sozusagen hintereinander geschaltet werden können, wobei die feste Raumebene entweder erhalten bleibt oder aber um 90° gekippt wird, so daß letztendlich für eine beliebige feste Raumebene gesorgt werden kann, an der der Bearbeitungskopf in einer gewünschten Ausrichtung angeordnet wird.

Dabei ist es dann bevorzugt, wenn mindestens zwei Bewegungsbahnen sich senkrecht schneiden.

Hier ist von Vorteil, daß zwei aufeinanderfolgende Parallelogrammführungen so angeordnet werden können, daß sie in unterschiedlichen Ebenen des kartesischen Koordinatensystemes verschwenken, wodurch die gewünschte Zugänglichkeit des gesamten Arbeitsraumes sichergestellt ist.

Die insoweit beschriebenen Parallelogrammführungen können zwar nach Art eines Parallelogrammgestänges aufgebaut sein, wegen der gewünschten Steifigkeit werden die vier Kanten eines jeden Parallelogrammes jedoch durch Platten oder Bleche gebildet, so daß das Parallelogramm sozusagen eine endliche Tiefe erhält. In einer der Diagonalen ist ein Linear-Stellantrieb angeordnet, der vorzugsweise eine Kugelrollspindel umfaßt. Diese Kugelrollspindel wird endseitig im Bereich zweier sich diagonal gegenüberstehender Schwenkachsen befestigt, wobei diese Schwenkachsen von der Länge her der oben erwähnten "Tiefe" des Parallelogrammes entsprechen. Dabei ist es bevorzugt, wenn die Kugelrollspindel etwa mittig an dem Schwenkachsen angeordnet ist, so daß durch diese zentrische Anordnung weiter Verwindungen vermieden werden.

Insgesamt führen die hier erwähnten Maßnahmen zu einer sehr kompakten, preiswerten und steifen Werkzeugmaschine, deren Ansteuerung mit moderner Rechnertechnik kein Problem darstellt.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Fig. 1: eine schematische Seitenansicht eines ersten Ausführungsbeispieles der neuen Werkzeugmaschine;
- Fig. 2: ein die Bewegungsbahnen der Werkzeugmaschine aus Fig. 1 erläuterndes Diagramm;
- Fig. 3: eine schematische Seitenansicht eines weiteren Ausführungsbeispieles der neuen Werkzeugmaschine; und
- Fig. 4: ein schematisches Diagramm der Bewegungsbahnen der Werkzeugmaschine aus Fig. 3.

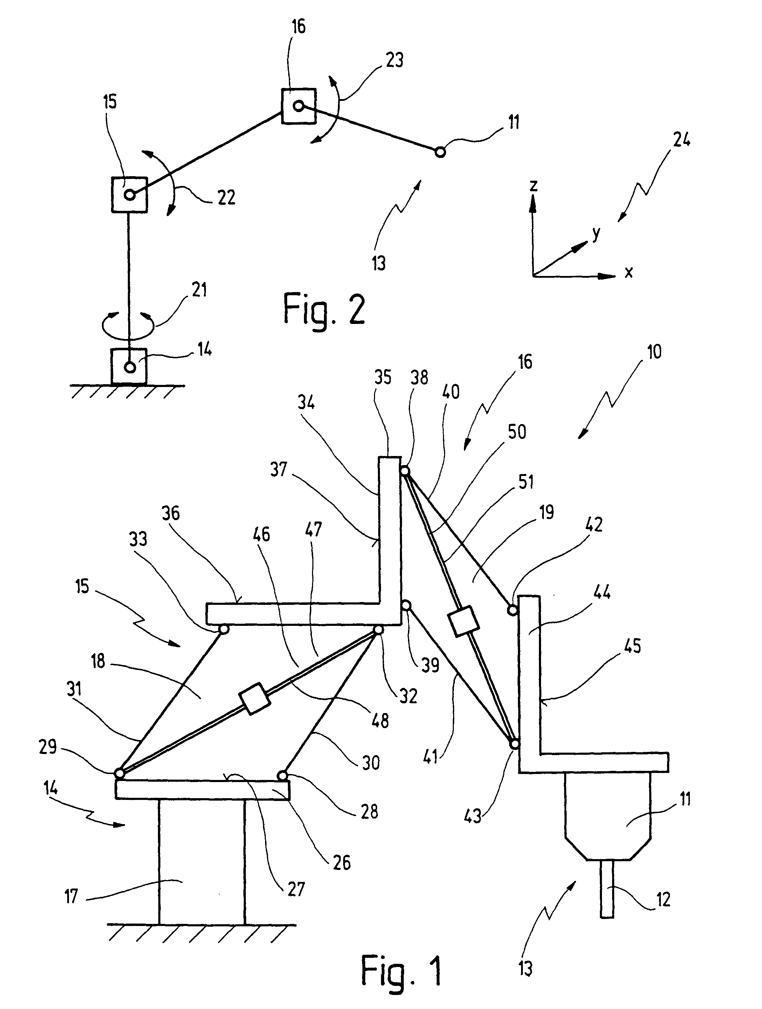

In Fig. 1 ist mit 10 eine Werkzeugmaschine bezeichnet, die einen Bearbeitungskopf 11 mit einem Werkzeug 12 aufweist. Die Werkzeugmaschine 10 ist lediglich schematisch angedeutet, auf Konstruktionsdetails wurde der Übersichtlichkeit wegen verzichtet.

Zum Verfahren des Bearbeitungskopfes 11 und damit des Werkzeuges 12 in einem bei 13 angedeuteten Arbeitsraum sind drei Antriebseinheiten 14, 15, 16 vorgesehen. Die Antriebseinheit 14 umfaßt eine drehbare Säule 17, während die Antriebseinheiten 15 und 16 jeweils eine Parallelogrammführung 18 bzw. 19 umfassen.

Zur Erläuterung der Bewegungsabläufe der Werkzeugmaschine 10 aus Fig. 1 wird nun zunächst auf Fig. 2 Bezug genommen. Dort ist zu erkennen, daß die Antriebseinheit 14, also die drehbare Säule 17 der Werkzeugmaschine 10 eine bei 21 angedeutete kreisbogenförmige Bewegungsbahn verleiht, während die Antriebseinheiten 15 und 16 Bewegungsbahnen 22 und 23 ermöglichen. Es ist zu erkennen, daß die Bewegungsbahn 21 die Bewegungsbahn 22 und 23 senkrecht schneidet, während alle drei Bewegungsbahnen kreisbogenförmig verlaufen. Der in Fig. 2 bei 11 angedeutete Bearbeitungskopf kann nun durch entsprechendes Verfahren längs der Bewegungsbahnen 21, 22, 23 an jeden beliebigen Punkt in dem Bearbeitungsraum 13 gebracht werden.

Zur Verdeutlichung ist in Fig. 2 ein Koordinatensystem 24 angedeutet, das die kartesischen x-, y- und z-Achsen aufweist.

Ein Verschwenken der Antriebseinheit 15 führt folglich dazu, daß sich der Bearbeitungskopf 11 sowohl in der x- als auch in der z-Achse längs einer kreisbogenförmigen Bahn bewegt. Soll nun bspw. lediglich eine Bewegung in der x-Achse vorgenommen werden, so wird die "unerwünschte" Bewegung in der z-Achse durch die Antriebseinheit 16 kompensiert. Mit anderen Worten, durch geeignetes Verfahren längs der Bewegungsbahnen 22 und 23 kann der Bearbeitungskopf 11 jeden beliebigen Punkt in der (x/z)-Raumebene einnehmen.

Durch die zusätzliche Bewegungsbahn 21 wird der Bearbeitungskopf 11 in der (x/y)-Raumebene verfahren, wobei während des Schwenkens der Bearbeitungskopf 11 gleichzeitig seine Position bezüglich der x- und bezüglich der y-Achse in einer Kreisbahn verändert. Die dabei ggf. unerwünschte Änderung in der x-Achse kann durch die Antriebseinheiten 15 und 16 kompensiert werden.

Es ist zu erkennen, daß sich durch die geschilderten kreisbogenförmigen Bewegungsbahnen 21, 22, 23 jeder Raumpunkt in dem Arbeitsraum 13 mit dem Bearbeitungskopf anfahren läßt.

Es sei bemerkt, daß die Bewegungsbahn 21 durch die drehbare Säule 17 realisiert wird, während die Bewegungsbahnen 22 und 23 in jetzt noch zu beschreibender Weise durch die Parallelogrammführungen 18 und 19 realisiert werden.

Zurückkehrend zu Fig. 1 ist dort zu erkennen, daß auf der drehbaren Säule 17 ein Verbindungsteil 26 angeordnet ist, das eine feste Raumebene 27 aufspannt, die der kartesischen (x/y)-Raumebene entspricht. An dem Verbindungsteil 26 sind zwei zueinander parallele Schwenkachsen 28, 29 angeordnet, die sich in die Zeichnungsebene der Fig. 1 hinein erstrecken. Von den Schwenkachsen 28, 29 erstrecken sich Abstandshalter 30, 31 zu weiteren Schwenkachsen 32, 33 der Parallelogrammführung 18. Es ist zu erkennen, daß die zueinander parallel verlaufenden Schwenkachsen 28, 29, 32, 33 in den Ecken eines Parallelogrammes liegen, wobei die Kanten des Parallelogrammes durch die Abstandshalter 30, 31 sowie das Verbindungsteil 26 definiert sind.

Die Schwenkachsen 32, 33 sind an einem Verbindungsteil 34 angeordnet, das in dem gezeigten Ausführungsbeispiel ein Winkeleisen 35 ist. Selbstverständlich kann auch ein anderes geeignetes Verbindungsteil 34 verwendet werden, z.B. ein Teil mit rohrförmigem, rechteckigen Querschnitt.

Das Winkeleisen 35 spannt für die Schwenkachsen 32, 33 eine feste Raumebene 36 auf, die parallel zu der Raumebene 27 verläuft. Senkrecht zu der festen Raumebene 36 ist eine weitere feste Raumebene 37 angeordnet, die im kartesischen Koordinatensystem der (y/z)-Ebene entspricht.

In der Raumebene 37 sind zwei Schwenkachsen 38, 39 der Parallelogrammführung 19 angeordnet. Schwenkbar an diesen Schwenkachsen 38, 39 sind Abstandshalter 40, 41 angeordnet, die anderen Endes schwenkbar an Schwenkachsen 42, 43 gelagert sind. Diese Schwenkachsen 42, 43 wiederum sind an einem Winkeleisen 44 befestigt, das eine feste Raumebene 45 definiert, die parallel zu der Raumebene 37 liegt.

Senkrecht zu der festen Raumebene 45 ist an einem Ausleger des Winkeleisens 44 der Bearbeitungskopf 11 angeordnet, der somit senkrecht auf die (x/y)-Ebene zeigt.

Selbstverständlich sind die Abstandshalter 30, 31 sowie 40, 41, die Verbindungsteile 26 und 34 sowie das Winkeleisen 44 mit einer entsprechenden Ausdehnung in die Zeichnungsebene der Fig. 1 hinein versehen, haben also eine entsprechende Tiefe. Die Abstandshalter 30, 31, 40, 41 sind bspw. Stahlbleche, die für eine entsprechende Steifigkeit der Parallelogrammkonstruktionen sorgen.

In einer Diagonalen 46 der Parallelogrammführung 18 ist ein Linear-Stellantrieb 47 in Form einer Kugelrollspindel 48 angeordnet, um den Abstand zwischen den Schwenkachsen 29 und 32 zu verändern und dadurch die Abstandshalter 30, 31 zu schwenken, so daß der Bearbeitungskopf 11 eine Bewegung längs der Bewegungsbahn 22 aus Fig. 2 vollführt.

Entsprechend ist in einer Diagonalen 50 der Parallelogrammführung 19 eine weitere Kugelrollspindel 51 angeordnet, über die der Abstand zwischen den Schwenkachsen 38 und 43 verändert werden kann, wobei der Bearbeitungskopf 11 dann eine Bewegung in der Bewegungsbahn 23 vollführt.

Durch die Parallelogrammführungen 18 und 19 weist die Werkzeugmaschine 10 eine sehr große Steifigkeit auf, so daß der Bearbeitungskopf 11 reproduzierbar und mit hoher Auflösung an ein zu bearbeitendes Werkstück im Arbeitsraum 13 gefahren werden kann.

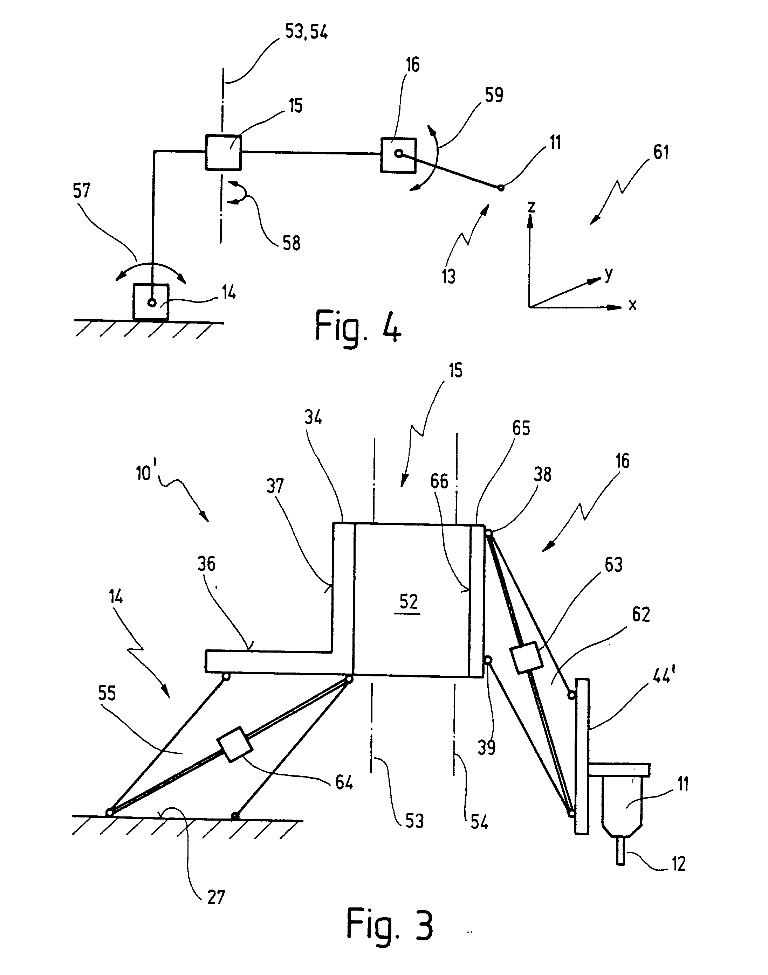

In Fig. 3 ist ein weiteres Ausführungsbeispiel einer neuen Werkzeugmaschine 10' gezeigt, bei der die Antriebseinheit 16 im wesentlichen der Antriebseinheit 16 aus Fig. 1 entspricht. Die Antriebseinheit 15 ist jetzt eine Parallelogrammführung, bei der Abstandshalter 52 in Form von Blechen o.ä. um in Fig. 3 senkrecht verlaufende Schwenkachsen 53, 54 schwenkbar angeordnet sind. Die Antriebseinheit 14 umfaßt jetzt ebenfalls eine Parallelogrammführung 55, die im wesentlichen der Parallelogrammführung 18 aus Fig. 1 entspricht.

Zwischen der Parallelogrammführung 55 und der Parallelogrammführung der Antriebseinheit 15 ist wiederum das aus Fig. 1 bereits bekannte Verbindungsteil 34 angeordnet, an dem die senkrecht zueinander stehenden festen Raumebenen 36 und 37 definiert sind.

In Fig. 4 ist ein schematisches Diagramm der Werkzeugmaschine aus Fig. 3 gezeigt. Die Antriebseinheit 14 verschwenkt jetzt den Bearbeitungskopf 11 längs einer Bewegungsbahn 57, die Antriebseinheit 15 verschwenkt den Bearbeitungskopf 11 längs einer Bewegungsbahn 58 und die Antriebseinheit 16 verschwenkt den Bearbeitungskopf 11 längs einer Bewegungsbahn 59.

Wie anhand des in Fig. 4 dargestellten kartesischen Koordinatensystemes 61 zu erkennen ist, verläuft die Bewegungsbahn 57 in der (x/z)-Raumebene, die Bewegungsbahn 58 in der (x/y)-Raumebene und die Bewegungsbahn 59 wieder in der (x/z)-Raumebene des kartesischen Koordinatensystemes. Auch hier sind alle Bewegungsbahnen 57, 58, 59 kreisbogenförmig.

Wie schon bei dem Diagramm aus Fig. 2 ist auch in Fig. 4 zu erkennen, daß de Bearbeitungskopf 11 an einen beliebigen Raumpunkt in dem schematisch bezeichneten Arbeitsraum 13 gebracht werden kann, in dem die kreisbogenförmig verlaufenden Bewegungsbahnen 57, 58, 59 in entsprechender Überlagerung durchfahren werden.

In Fig. 3 ist ferner zu erkennen, daß die Parallelogrammführung 62 der Antriebseinheit 16 sowie die Parallelogrammführung 55 wiederum mit Linear-Stellantrieben 63, 64 ausgestattet sind, die für die Bewegungsbahnen 57 und 59 sorgen. Der Linear-Stellantrieb der Antriebseinheit 15 ist in Fig. 3 nicht dargestellt.

Abschließend sei noch bemerkt, daß durch das Eigengewicht der Werkzeugmaschine 10', insbesondere des Bearbeitungskopfes 11, die Werkzeugmaschine sozusagen in die in Fig. 3 gezeigte Stellung "vorgespannt" ist, so daß die Linear-Stellantriebe 63 und 64 ständig unter Zug-Spannung stehen. Hierdurch wird nicht nur das Problem des mechanischen Spieles gelöst, sondern auch für eine sehr steife Ausgestaltung der Werkzeugmaschine 10' gesorgt.

Ferner ist in Fig. 3 zu erkennen, daß zwischen den Antriebseinheiten 15 und 16 ein Verbindungsteil 65 vorgesehen ist, an dem einerseits die Schwenkachsen 54 und andererseits die Schwenkachsen 38 und 39 angeordnet sind. Sämtliche vier Schwenkachsen liegen in einer festen Raumebene 66, die parallel zu der Raumebene 37 verläuft, wobei die Schwenkachsen 54 einerseits sowie 38, 39 andererseits senkrecht zueinander angeordnet sind.

## Patentansprüche

1. Werkzeugmaschine mit mehreren Antriebseinheiten (14, 15, 16) für einen Bearbeitungskopf (11), wobei jede Antriebseinheit (14, 15, 16) den Bearbeitungskopf (11) längs einer eigenen Bewegungsbahn (21, 22, 23; 57, 58, 59) verfährt, so daß ein von dem Bearbeitungskopf (11) gehaltenes Werkzeug (12) an jeden Raumpunkt in einem Arbeitsraum (13) verfahrbar ist,
**dadurch gekennzeichnet, daß** die Bewegungsbahnen (21, 22, 23; 57, 58, 59) kreisbogenförmig verlaufen, und zumindest eine Antriebseinheit (14, 15, 16) eine Parallelogrammführung (18, 19; 55, 62) umfaßt, wobei die Antriebseinheit (14, 15, 16) einen Linear-Stellantrieb (47) umfaßt, der in einer Diagonalen (46, 50) der Parallelogrammführung (18, 19; 55, 62) angeordnet ist, um über eine Längenveränderung dieser Diagonalen (46, 50) den Bearbeitungskopf (11) zu verfahren.

2. Werkzeugmaschine nach Anspruch 1, **dadurch gekennzeichnet, daß** zumindest zwei Bewegungsbahnen (21 und 22; 57 und 58) sich senkrecht schneiden.

3. Werkzeugmaschine nach Anspruch 1 oder 2, **dadurch gekennzeichnet, daß** die Parallelogrammführung (18, 19) vier in den Ecken eines Parallelogrammes angeordnete, zueinander parallele Schwenkachsen (28, 29, 32, 33; 38, 39, 42, 43) aufweist, über die Kanten des Parallelogrammes ausmachende Abstandshalter (30, 31, 40, 41; 52) schwenkbar miteinander verbunden sind.

4. Werkzeugmaschine nach Anspruch 3, **dadurch gekennzeichnet, daß** zwei benachbarte Schwenkachsen (28, 29; 32, 33; 38, 39; 42, 43) einer Parallelogrammführung (18, 19) fest in einer Raumebene (27; 36; 37; 45) angeordnet sind.

5. Werkzeugmaschine nach Anspruch 4, **dadurch gekennzeichnet, daß** zwischen zwei aufeinanderfolgenden Parallelogrammführungen (18, 19) ein Verbindungsteil (34; 66) vorgesehen ist, an dem je zwei Schwenkachsen (32, 33; 38, 39; 54, 38, 39) einer jeden Parallelogrammführung (18, 19) in je einer Raumebene (36, 37; 66) angeordnet sind, wobei die beiden Raumebenen (36, 37; 66) senkrecht oder parallel zueinander verlaufen.

6. Werkzeugmaschine nach Anspruch 1, **dadurch gekennzeichnet, daß** der Linear-Stellantrieb (47) eine Kugelrollspindel (48) umfaßt.

## Claims

1. Machine tool having a plurality of drive units (14, 15, 16) for a tool head (11), wherein each drive unit (14, 15, 16) moves the tool head (11) along a separate path of motion (21, 22, 23; 57, 58, 59), so that a tool (12) held by the tool head (11) is movable up to any spatial point in a working area (13),
**characterized in that** the paths of motion (21, 22, 23; 57, 58, 59) extend in the shape of an arc, and at least one drive unit (14, 15, 16) comprises a parallelogram guide (18, 19; 55, 62), wherein the drive unit (14, 15, 16) comprises a linear-motion actuator (47), which is disposed in a diagonal (46, 50) of the parallelogram guide (18, 19; 55, 62), in order to move the tool head (11) by means of a variation of the length of said diagonal (46, 50).

2. Machine tool according to claim 1, **characterized in that** at least two paths of motion (21 and 22; 57 and 58) vertically intersect.

3. Machine tool according to claim 1 or 2, **characterized in that** the parallelogram guide (18, 19) comprises four mutually parallel swivelling axes (28, 29, 32, 33; 38, 39, 42, 43), which are disposed in the corners of a parallelogram and by which spacers (30, 31, 40, 41; 52) forming edges of the parallelogram are pivotally connected to one another.

4. Machine tool according to claim 3, **characterized in that** two adjacent swivelling axes (28, 29; 32, 33; 38, 39; 42, 43) of a parallelogram guide (18, 19) are disposed permanently in a spatial plane (27; 36; 37; 45).

5. Machine tool according to claim 4, **characterized in that** provided between two successive parallelogram guides (18, 19) is a connecting piece (34; 66), on which two swivelling axes (32, 33; 38, 39; 54, 38, 39) of each parallelogram guide (18, 19) are disposed in each case in a spatial plane (36, 37; 66), wherein the two spatial planes (36, 37; 66) extend at right angles or parallel to one another.

6. Machine tool according to claim 1, **characterized in that** the linear-motion actuator (47) comprises a ball screw (48).

## Revendications

1. Machine-outil comportant plusieurs unités d'entraînement (14, 15, 16) pour une tête d'usinage (11), chaque unité d'entraînement (14, 15, 16) déplaçant la tête d'usinage (11) le long de sa propre trajectoire (21, 22, 23 ; 57, 58, 59), de sorte qu'un outil (12) maintenu par la tête d'usinage (11) peut être déplacé en tout point de l'espace dans un espace de travail (13),
**caractérisée en ce que** les trajectoires (21, 22, 23; 57, 58, 59) s'étendent en arc de cercle et une unité d'entraînement (14, 15, 16) au moins comprend un guide à parallélogramme (18, 19 ; 55, 62), l'unité d'entraînement (14, 15, 16) comprenant un dispositif d'entraînement linéaire de positionnement (47) qui est disposé dans une diagonale (46, 50) du guide à parallélogramme (18, 19 ; 55, 62), pour déplacer la tête d'usinage (11) par une variation de la longueur de cette diagonale (46, 50).

2. Machine-outil selon la revendication 1, **caractérisée en ce que** deux trajectoires (21, 22 ; 57 et 58) au moins se coupent à angle droit.

3. Machine-outil selon la revendication 1 ou 2, **caractérisée en ce que** le guide à parallélogramme (18, 19) comporte quatre axes de pivotement (28, 29, 32, 33 ; 38, 39, 42, 43) parallèles entre eux et disposés dans les angles d'un parallélogramme, par lesquels des entretoises (30, 31, 40, 41 ; 52), qui constituent les côtés du parallélogramme, sont reliées entre elles de manière à pouvoir pivoter.

4. Machine-outil selon la revendication 3, **caractérisée en ce que** deux axes de pivotement (28, 29; 32, 33; 38, 39 ; 42, 43) consécutifs d'un guide à parallélogramme (18, 19) sont disposés fixement dans un plan spatial (27 ; 36 ; 37 ; 45).

5. Machine-outil selon la revendication 4, **caractérisée en ce qu'**un élément de liaison (34 ; 66), sur lequel deux axes de pivotement (32, 33 ; 38, 39; 54, 38, 39) de chaque guide à parallélogramme (18, 19) sont disposés dans un plan spatial (36, 37, 66), est prévu entre deux guides à parallélogramme (18, 19) successifs, les deux plans spatiaux (36, 37; 66) s'étendant perpendiculairement ou parallèlement entre eux.

6. Machine-outil selon la revendication 1, **caractérisée en ce que** le dispositif d'entraînement linéaire de positionnement (37) comprend une tige filetée à billes (48).
